**Europäisches Patentamt**

**European Patent Office**

**Office européen des brevets**

(19)

(11) **EP 0 962 312 B1**

(12) **EUROPEAN PATENT SPECIFICATION**

(45) Date of publication and mention
of the grant of the patent:
**31.03.2004 Bulletin 2004/14**

(51) Int Cl.⁷: **B32B 27/08**

(21) Application number: **99304317.3**

(22) Date of filing: **03.06.1999**

(54) **Easily openable container and unit for use in the same**

Leicht zu öffnender Behälter und dafür geeignete Behältereinheit

Récipient à ouverture facile et son utilisation dans un ensemble de récipient

(84) Designated Contracting States:
**DE FR GB IT**

(30) Priority: **03.06.1998 JP 15477598**

(43) Date of publication of application:
**08.12.1999 Bulletin 1999/49**

(73) Proprietors:
  • **Japan Polystyrene Inc.**
    **Tokyo (JP)**
  • **Yokota Tohoku Co., Ltd**
    **Shinjo-city, Yamagata (JP)**

(72) Inventors:
  • **Yokota, Kenzi**
    **Chiba (JP)**
  • **Ishii, Takahiro**
    **Takaishi-shi, Osaka (JP)**
  • **Uemura, Akio**
    **Takaishi-shi, Osaka (JP)**
  • **Sato, Masaru**
    **Takaishi-shi, Osaka (JP)**
  • **Takaku, Masato**
    **Takaishi-shi, Osaka (JP)**

(74) Representative: **Kirkham, Nicholas Andrew et al**
  **Graham Watt & Co.**
  **St. Botolph's House**
  **7-9 St. Botolph's Road**
  **Sevenoaks Kent TN13 3AJ (GB)**

(56) References cited:
  • **DATABASE WPI Section Ch, Week 199432 Derwent Publications Ltd., London, GB; Class A18, AN 1994-260055 XP002163054 & JP 06 190988 A (DAICEL CHEM IND LTD), 12 July 1994 (1994-07-12)**

EP 0 962 312 B1

**Description**

The present invention relates to a vessel and a container unit which is used to pack contents such as food. More specifically, it relates to a container unit comprising a vessel portion and a lid portion, in which the contents can be prevented from leaking and can be easily extracted by peeling a film of the lid portion by hand and which is excellent in terms of sheet moldability for the formation of the vessel portions during vacuum forming and/or air-pressure forming, and which can be molded effectively in a short time. The invention comprehends an easily openable container in which the container unit is used.

From a container for use in the packing of food, contents are taken out by opening the container. However, in the case of the container which is to be opened by peeling the film of a lid portion or the like, the adhesive strength of a seal portion is often too high. Either the film cannot be peeled away or a large force is required or the container cannot be opened properly. This kind of container is not desirable from the viewpoint of being barrier-free. If the adhesive strength is insufficient, however, there is a danger that the contents may leak out, e.g. during transportation. Therefore, an easily openable container has been desired in which the lid can be easily peeled by hand to access the contents but which can prevent the contents from leaking out, e.g. during transportation.

A polystyrene resin has high stiffness and excellent dimensional stability and is inexpensive, and for these reasons, it has been widely used as a material for injection molding and a material for sheet forming. Furthermore, the vacuum forming and/or the air-pressure forming of the polystyrene resin into vessels is easier as compared with that of a polyolefin resin, and since the polystyrene resin is an amorphous resin, molding time and particularly cooling time can be curtailed. In addition, the polystyrene resin is excellent in dimensional stability during molding and conveniently has high stiffness. However, the polystyrene resin has a drawback that it is hard, brittle and poorer in oil resistance and chemical resistance than polyolefin resin.

In the other hand, polyolefin resin is excellent in resistance to oils and in chemical resistance to organic solvents, and it also has excellent strength. However, since the polyolefin resin is a crystalline resin, the dimensional stability after molding is low, and the stiffness is also inconveniently low.

We are aware of Japanese patent application JP-A-6190988 (Daicel Shem Ind Ltd) which describes a thermoplastic resin sheet having high oil resistance which is formed by laminating a polystyrene type resin sheet to a resin composition film. The film is produced from a resin composition comprising a polystyrene type resin, a polyolefin type resin and a hydrogenated styrene-conjugated diene block copolymer. The sheet may be moulded for use as food packaging.

In view of such circumstances, the problem to be solved by the present invention is to provide a container unit comprising a vessel portion and a lid portion which are excellent in dimensional stability during the vacuum forming and/or the air-pressure forming of a sheet for the formation of the vessel and which can be molded in a short time and which is excellent in impact resistance, stiffness, oil resistance and chemical resistance and in which, when the lid is put on the container after filling it, the contents do not leak out during transportation but can be accessed easily peeling the film of the lid portion by hand. The invention provides a vessel portion for use in the container unit; and an easily openable container in which the container unit is used.

The present inventors have intensively investigated, and as a result, have found that the above-mentioned problems such as the regulation of adhesive strength between a vessel portion and a lid portion, impact resistance and stiffness can be solved by blending a polystyrene resin with a polyolefin resin or forming a single-layer or a multi-layer structure thereof, and then disposing it at a suitable position. On the basis of this finding, the present invention has been attained.

According to the presesnt invention there is provided a container unit comprising a moulded vessel and a film lid, wherein

(i) the vessel is obtainable by moulding a multi-layer sheet wherein at least one surface layer (a) of the sheet comprises a resin composition including from 1 to 96% by weight of a styrene polymer resin (A), from 96 to 1% by weight of a polyolefin resin (B), and from 3 to 25% by weight of another polymer (C) which is at least one of styrene copolymers and copolymers each comprising ethylene and one or more vinyl monomers of unsaturated carboxylic acids, unsaturated carboxylic acids, unsaturated carboxylates and vinyl acetate, having a solubility parameter in the range of 8.40 to 8.70, wherein the solubility parameter is calculated in accordance with the following equation:

$$SP = \frac{\Sigma Fi}{V} = \frac{\rho \bullet \Sigma Fi}{M} \tag{1}$$

wherein Fi is the mol attractive force of the atoms or atom groups constituting the molecule, or a constitutional group such as a bonding type; V is a molar volume; $\rho$ is the density and M is the molecular weight of a monomer unit of the polymer, and at least one of the other layers includes a polystyrene resin (D), and

(ii) the film lid comprises a single layer or multi-layer film, a surface (b) of which comprises polypropylene.

Preferred embodiments of the invention include the following:-

(a). The container unit wherein the component (A) of the vessel (1) is 1 to 50% by weight of the styrene polymer resin, the component (B) is 96 to 50% by weight of the polyolefin resin, and in the lid (2), at least one surface layer (b) of the single-layer film or the multi-layer film comprising two or more layers is the polyolefin resin.
(b). The container unit wherein the component (A) of the vessel (1) is 96 to 50% by weight of the styrene polymer resin, the component (B) is 50 to 1% by weight of the polyolefin resin, and in the lid (2), at least one surface layer (b) of the single-layer film or the multi-layer film comprising two or more layers is the polystyrene resin.
(c). The container unit wherein the polyolefin resin of the lid is polypropylene.
(d). The vessel wherein the polymer of the component (C) is at least one of ethylene-methyl methacrylate copolymer and styrene-butadiene copolymer.
(e). The vessel wherein the polymer of the component (C) is at least one of ethylene-methyl methacrylate copolymer and styrene-butadiene copolymer including 35 to 70% by weight of styrene.
(f). The vessel wherein the polymer of the component (C) is at least one of ethylene-vinyl acetate copolymer and styrene-butadiene copolymer.
(g). The vessel wherein the polymer of the component (C) is at least one of ethylene-vinyl acetate copolymer and styrene-butadiene copolymer including 35 to 70% by weight of styrene.
(h). An easily openable container in which the vessel and the lid are bonded to each other by the surface layer (a) and the surface layer (b).
(i). The easily openable container wherein the vessel and the lid are bonded to each other by heat sealing between the surface layer portion (a) and the surface layer portion (b).
(j). The easily openable container wherein the easily openable container is a food container.
(k). The easily openable container which is a bean curd container.
(l). A method for packing food by the use of the container unit which comprises the steps of packing the food into the container, and then bonding a lid to the container.

Embodiments of the present invention will now be described in more detail by way of example in the following description.
A "container" referred to in the present specification comprises a "vessel" portion for receiving contents such as food and a "lid" portion for preventing the contents from leaking out.
As a polystyrene resin (A) which can be used in the present invention, there can be used any of the so-called general-purpose polystyrene resins, rubber modified polystyrene resins, and mixtures thereof. In point of impact strength, the rubber modified polystyrene resins are preferable. Crystalline syndiotactic polystyrenes which have been brought to market in recent years are not included in the polystyrene resin.
Here, the general-purpose polystyrene resin is also called a general purpose polystyrene (GPPS), and it is usually a styrene homopolymer. Furthermore, rubber modified polystyrene resin can be obtained by polymerizing a styrene monomer in the presence of a rubbery polymer, and it is also called a high impact polystyrene (HIPS). With regard to the molecular structure of the polystyrene resin, both a straight-chain type and a branched chain type are usable.
As the styrene monomer which can be used for the preparation of the styrene resin, styrene is usual, but there can also be used alkyl-substituted styrenes such as α-methylstyrene, o-methylstyrene, m-methylstyrene, p-methylstyrene, and mixtures thereof.
Examples of a polyolefin resin which is a component (B) for use in the present invention include olefin homopolymer, copolymers obtained by copolymerizing an olefin with a copolymerizable olefin as well as mixtures thereof, but copolymers of the olefins and compounds other than the olefins are not included.
Typical examples of the polyolefin resins include polyethylene, copolymers of ethylene and α-olefins having 3 to 10 carbon atoms such as ethylene-butene-1 copolymer, ethylene-hexene-1 copolymer and ethylene-4-methylpentene-1 copolymer, and propylene polymers such as polypropylene, propylene-ethylene block copolymer and propylene-ethylene random copolymer.
Above all, preferred are polyethylene, copolymers of ethylene and α-olefins having 4 to 10 carbon atoms such as ethylene-butene-1 copolymer and ethylene-hexene-1 copolymer, polypropylene, propylene-ethylene block copolymer, and propylene-ethylene random copolymer.
A solubility parameter (SP) of a component (C) for use in the present invention is in the range of 8.40 to 8.70, preferably 8.40 to 8.65. If the solubility parameter is less than 8.40 or more than 8.70, the impact resistance and the tensile elongation at break of the vessel portion, and an adhesive strength between the lid portion and the vessel portion are poor.

The solubility parameter is defined as an attractive force between molecules on the basis of the Hildebrand-Scatchard's theory. The detail of the solubility parameter is described in usual textbooks of polymeric science, for example, Polymer Blend, Saburo Akiyama et al., CMC Co., Ltd., 4th Impression, p. 125-144 (1991), "The Solubility of Nonelectrolytes" Third Edition, Reinhold Publishing Corp., New York, 1949, Chem. Rev, 8, 321(1931), and the like. However, this solubility parameter can be obtained by an experiment of a viscosity method, a swelling method or the like, or by calculation on the basis of a molecular structure, and a value of the solubility parameter slightly varies with the selected method. The present invention employs the method of calculating the solubility parameter on the basis of the molecular structure which has been suggested by Small. This method and theory are described in detail in "Journal of Applied Chemistry", Vol. 3, p. 71-80 (1953). Thus, the solubility parameter is calculated in accordance with the following equation 1:

$$SP = \frac{\Sigma Fi}{V} = \frac{\rho \cdot \Sigma Fi}{M}$$

wherein Fi is a mol attractive force of atoms or an atom group constituting a molecule, or a constitutional group such as a bonding type; V is a molar volume; ρ is a density; and M is a molecular weight, and in the case of a polymer, it is a molecular weight of a monomer unit.

As the value of Fi, a Small's value mentioned in the above-mentioned two literatures is used. With regard to ρ, Σ Fi or M of a copolymer, for the establishment of moldability, there is used a sum of values obtained by multiplying the value of ρ, ΣFi or M of each homopolymer of a monomer unit constituting the copolymer by a mol fraction of the monomer unit.

The polymer in which the solubility parameter (SP) of the component (C) for use in the present invention is in the range of 8.40 to 8.70 includes copolymers comprising ethylene and one or more vinyl monomers of unsaturated carboxylic acids, unsaturated carboxylates and vinyl acetate, and styrene copolymers. Examples of these copolymers include ethylene-unsaturated carboxylic acid copolymers, ethylene-unsaturated carboxylate copolymers, ethylene-vinyl acetate copolymers, ethylene-unsaturated carboxylate-vinyl acetate three-component copolymers, multicomponent copolymers comprising ethylene and two or more kinds of unsaturated carboxylates, styrene-butadiene copolymer, styrene-isopropylene copolymer, hydrogenated styrene-butadiene copolymer, and hydrogenated styreneisoprene copolymer.

Typical examples of the unsaturated carboxylic acid include acrylic acid and methacrylic acid. Furthermore, typical examples of the unsaturated carboxylate include ethyl acrylate, methyl acrylate, 2-ethylhexyl acrylate, stearyl acrylate, glycidyl acrylate, methyl methacrylate, ethyl methacrylate, 2-ethylhexyl methacrylate, stearyl methacrylate and glycidyl methacrylate.

Preferred examples of the copolymers comprising ethylene and one or more vinyl monomers of unsaturated carboxylic acids, unsaturated carboxylates and vinyl acetate which can be used in the present invention include ethylene-acrylic acid copolymer, ethylene-methacrylic acid copolymer, ethylene-methyl methacrylate copolymer, ethylene-ethyl methacrylate copolymer, ethylene-ethyl acrylate copolymer, ethylene-methyl acrylate copolymer, ethylene-vinyl acetate copolymer, ethylene-methyl acrylate-glycidyl methacrylate copolymer, ethylene-methyl methacrylate glycidyl methacrylate copolymer and ethylene-vinyl acetate-glycidyl methacrylate copolymer.

A ratio between the vinyl monomer and ethylene in the copolymer can be suitably decided in such a range as to give the copolymer in which the solubility parameter (SP) is in the range of 8.40 to 8.70, preferably 8.40 to 8.65. The ratio of the vinyl monomer in the copolymer of the vinyl monomer is preferably in the range of 5 to 60% by weight, more preferably 10 to 50% by weight. No particular restriction is put on a bonding style (e.g., random, block or alternate) of the vinyl monomer and ethylene in the copolymer. Furthermore, a melt flow rate of the copolymer (in accordance with JIS K7210, temperature = 190°C, load = 2.16 kgf) is not particularly limited, but it is preferably in the range of about 1 to 500 g/10 minutes.

Typical examples of the styrene copolymer which can be used as the component (C) include styrene-butadiene copolymer, styrene-isopropylene copolymer, hydrogenated styrene-butadiene copolymer and hydrogenated styreneisoprene copolymer.

Examples of the styrene monomer which can be used to prepare the component (C) include styrene, alkyl-substituted styrenes such as α-methylstyrene, o-methylstyrene, m-methylstyrene, p-methylstyrene, and mixtures thereof.

A ratio between the styrene monomer and comonomer for it in the styrene copolymer can be suitably decided in such a range as to give the copolymer in which the solubility parameter (SP) is in the range of 8.40 to 8.70. The ratio of the comonomer in the styrene copolymer is preferably in the range of 20 to 80% by weight, more preferably 35 to 70% by weight. No particular restriction is put on a bonding style (e.g., random, block or alternate) of the styrene monomer and the comonomer in the copolymer.

The polymer (C) of the present invention in which the solubility parameter (SP) is in the range of 8.40 to 8.70 does not include the polystyrene resin in the category of the above-mentioned (A) and the polyolefin resin in the category of the above-mentioned (B).

With regard to ratios of the components (A) to (C) to be used in the present invention, the ratio of the polystyrene resin (A) is in the range of 1 to 96% by weight, and in the case that a layer (b) of the lid portion is the polyolefin resin, the ratio of the polystyrene resin (A) is in the range of 1 to 50% by weight, more preferably 30 to 50% by weight. In the case that the layer (b) of the lid portion is the polystyrene resin, the ratio of the polystyrene resin (A) is in the range of 96 to 50% by weight, more preferably 70 to 50% by weight. The ratio of the polyolefin resin (B) is in the range of 96 to 1% by weight, and in the case that the layer (b) of the lid portion is the polyolefin resin, the ratio of the polyolefin resin (B) is in the range of 96 to 50% by weight, more preferably 70 to 50% by weight. Furthermore, in the case that the layer (b) of the lid portion is the polystyrene resin, the ratio of the polyolefin resin (B) is preferably in the range of 1 to 50% by weight, more preferably 30 to 50% by weight. The ratio of the polymer (C) in which the solubility parameter (SP) is in the range of 8.40 to 8.70 is in the range of 3 to 25%, preferably 3 to 10% by weight, and the total of the components (A) to (C) is 100% by weight. In the present invention, another component may be further added besides these components (A) to (C), so long as the present invention is not impaired. In this case, the total including all of them is 100% by weight.

An adhesive strength between the lid portion and the vessel portion can be optionally controlled by changing a composition ratio between the polyolefin resin and the polystyrene resin.

If the polystyrene resin (A) is too little, stiffness is insufficient, and if it is too much, oil resistance and chemical resistance are poor. If the polyolefin resin (B) is too little, the oil resistance and the chemical resistance are poor, and if it is too much, the stiffness is insufficient. If polymer (C) in which the solubility parameter (SP) is in the range of 8.40 to 8.70 is too little, compatibility between the resins (A) and (B) is low, so that impact resistance and tensile elongation at break, and adhesive strength between the lid portion and the vessel portion are poor. Conversely, if it is too much, the stiffness is poor. If the polystyrene resin constituting the layer (b) of the lid portion or its composition ratio is 50% or more and if the polystyrene resin (A) is too little, the adhesive strength between the lid portion and the vessel portion are poor. If the polyolefin resin constituting the layer (b) of the lid portion or its composition ratio is 50% or more and if the polyolefin resin (B) is too little, the adhesive strength between the lid portion and the vessel portion are poor.

At least one layer of other layers of a surface layer portion (a) of the vessel portion of the present invention include a polystyrene resin (D). Furthermore, this layer may be associated with a sheet comprising the multi-layer of the present invention or another recycled substance. As the polystyrene resin (D) which can be used in the present invention, there can be used the so-called general-purpose polystyrene resins, rubber modified polystyrene resins and mixtures thereof. In order to secure the impact resistance, the rubber modified polystyrene resins are preferable.

Here, the general-purpose polystyrene resin is also called GPPS, and it does not contain a flexible component such as a rubbery polymer. Furthermore, the rubber modified polystyrene resin can be obtained by polymerizing a styrene monomer in the presence of a rubbery polymer, and it is also called a high-impact polystyrene (HIPS). With regard to the molecular structure of the polystyrene resin, both of a straight-chain type and a branched chain type are usable. This branched chain type can be obtained by using copolymerization with a multi-functional vinyl monomer such as divinylbenzene, a multi-functional initiator or a multi-functional chain transfer agent.

In necessary, some additives can be used, and examples of the additives include antioxidants, heat stabilizers, ultravoilet light absorbers, lubricants, flame retardants, antistatic agents and mineral oils.

As the styrene monomer which can be used for the preparation of the component (D), styrene is usual, but there can also be used alkyl-substituted styrenes such as α-methylstyrene, o-methylstyrene, m-methylstyrene, p-methylstyrene.

In order to obtain the surface layer portion (a) of the multi-layer sheet comprising two or more layers of the vessel portion of the present invention, predetermined amounts of the respective components are dry-blended by a mixing device such as a Henschel mixer or a tumbler, or they are sufficiently heated and kneaded at a temperature of 160 to 260°C by the use of a kneader such as a single screw extruder, a twin-screw extruder or a Banbury mixer, and then granulated. If necessary, some additives can be used, and examples of the additives include antioxidants, heat stabilizers, ultraviolet light absorbers, lubricants flame retardants, antistatic agents and mineral oils.

In a single-layer film or a multi-layer film comprising two or more layers of the lid portion of the present invention, at least one surface layer portion (b) contains a polyolefin resin, a polystyrene resin or a blend of the polyolefin resin and the polystyrene resin. An adhesive strength between the lid portion and the vessel portion can be optionally controlled by changing the composition ratio between the polyolefin resin and the polystyrene resin.

The polyolefin resin referred to herein includes olefin homopolymers, olefin copolymers obtained by copolymerizing copolymerizable olefins, and mixtures thereof.

Typical examples of the polyolefin resin include polyethylene, copolymers of ethylene and α-olefins having 4 to 10 carbon atoms such as ethylene-butene-1 copolymer and ethylene-hexene-1 copolymer, and propylene polymers such as polypropylene, propylene-ethylene block copolymer and propylene-ethylene random copolymer. Above all, polypropylene is preferable.

Here, the general-purpose polystyrene resin is also called GPPS, and it does not contain a flexible component such as a rubbery polymer. Furthermore, the rubber modified polystyrene resin can be obtained by polymerizing a styrene monomer in the presence of a rubbery polymer, and it is also called a high-impact polystyrene (HIPS). With regard to the molecular structure of the polystyrene resin, both of a straight-chain type and a branched chain type are usable. This branched chain type can be obtained by using copolymerization with a multi-functional vinyl monomer such as divinylbenzene, a multi-functional initiator or a multi-functional chain transfer agent.

In order to obtain the container of the present invention, a multi-layer sheet comprising two or more layers is formed, and then molded into a vessel shape by vacuum forming or air-pressure forming. Alternatively, a single-layer film or a multi-layer film comprising two or more layers is formed, and a surface layer (a) of the film is then stuck onto a surface layer (b) thereof.

As methods for obtaining the multi-layer sheet comprising two or more layers of the present invention, there are some known technical methods, for example, a co-extrusion molding method in which a multi-layer sheet extruder having two or more cylinders is used, and lamination methods such as a dry lamination method, a wet lamination method, a sand lamination method and a hot-melt lamination method in which the multi-layer or the single-layer film or sheet obtained by the same extruder as mentioned above is used.

As a technique for the vacuum forming or the air-pressure forming of the multi-layer sheet comprising two or more layers of the present invention into the vessel shape, there is a known method which comprises heating the sheet by the use of a usually usable vacuum forming machine or air-pressure forming machine, pressing the sheet against to a mold and then vacuuming or air-pressing it, and then blowing air against it for several seconds to cool it. If necessary, the formed vessel is punched by a punching blade to remove unnecessary portions therefrom.

As methods for obtaining the single-layer film or the multi-layer film comprising two or more layers of the present invention, there are some known techniques, for example, a single-layer extrusion method and co-extrusion method in which an inflation film manufacturing apparatus or a T-die film manufacturing apparatus having one or more cylinders is used, and lamination methods such as a dry lamination method, a wet lamination method, a sand lamination method and a hot-melt lamination method in which the multi-layer film or the single-layer film obtained by the same apparatus as mentioned above is used.

For the packing of food, a gas barrier resin layer of a nylon, a polyvinyl alcohol, a high-nitrile resin or the like is preferably used as an intermediate layer of the multi-layer film.

By the use of an adhesively combined container unit comprising the vessel portion and the lid portion of the present invention, an easily openable container which can be easily opened can be obtained. The most preferable technique for bonding both of them to each other is a heat sealing method, but it is not restrictive. For example, a bonding method by the use of a hot-melt adhesive can also be employed. In the well-known heat sealing method, the portions of the vessel and the lid to be sealed are heated, and they are then pressed against each other for several seconds.

The container comprising the "vessel" and the "lid" which can be obtained by the present invention can be used for packing contents such as food. In this kind of container, the contents can be easily removed by peeling the film of the lid portion by hand without spilling the contents, and the container is also excellent in the moldability of a sheet for the formation of the vessel portions at the time of vacuum forming or air-pressure forming and can be molded effectively in a short time. The container of the present invention is useful as the easily openable container, and the vessel portion has a relatively high stiffness. Therefore, the container of the present invention can be extremely suitably used as a package container e.g. for bean curd, pudding, jelly, yoghurt and ice cream which is sold in a supermarket or the like.

Now, the present invention will be described in accordance with examples, but the scope of the present invention should not be limited to these examples at all.

Examples 1 to 14, Comparative Examples 1 to 5

Components described in Tables 1 to 2 were melted and kneaded at a temperature of 160 to 240°C by the use of a multi-layer extruder (both the outer layers were made of the same material) for two kinds and three layers, and the mixture was then extruded through a T-die to obtain a sheet having a thickness of 0.5 mm. The thus obtained multi-layer sheet was molded into a vessel portion of a bean curd container by a vacuum forming machine and/or an air-pressure forming machine. This molded article was heat-sealed with a nylon-polypropylene two-layer film having a thickness of about 50 μm so that the polypropylene layer might be on a sheet side, and adhesive strength was then measured. The results are shown in Tables 1 and 2.

The data of the examples and the comparative examples shown in Tables 1 and 2 were prepared or measured in accordance with the following procedures. The measurements were all carried out at 23°C.

(1) Formation of a multi-layer sheet

A two-kind three-layer extruder having cylinder diameters of 120 mm and 90 mm was used.

An intermediate layer resin was extruded by the use of the extruder having a cylinder diameter of 120 mm, and a resin for both the outer layers was extruded by the use of the extruder having a cylinder diameter of 90 mm. The extrusion was carried out so that extrusion rates might be 15% by weight for both the outer layers and 70% by weight for the intermediate layer.

(2) Tensile strength, elongation at break

For the multi-layer sheet, the tensile strength and the elongation at break were measured in accordance with ASTM D638. In this case, a test piece No. 1 was used and a tension speed was 200 mm/min. The tensile strength was represented by strength at break when the test piece was broken.

(3) High speed puncture property

For the multi-layer sheet, the plane impact strength was measured in accordance with ASTM D3763. A weight having a load of 7.5 kg was spontaneously dropped from a height of 80 cm onto a flat surface of the test piece by the use of a "falling weight graphic impact tester" made by Toyo Seiki Manufacturing Co., Ltd., so that the test piece was completely broken or pierced with a striker attached to the lower portion of the weight. The total energy value of the breakage at this time was measured.

(4) Vacuum forming

The multi-layer sheet was vacuum formed into a bean curd shape at a heater temperature of 300°C by the use of a vacuum forming mold for 54 (9×6) articles. One molded article had a length of 78 mm, a width of 110 mm, a depth of 43 mm and a flange width of 8 mm. A cooling time depended on the samples, and the cooling was carried out, taking sufficient care so that the molded articles might not be deformed. Each cooling time was recorded.

(5) Oil resistance

A salad oil was placed in the vessel obtained by the vacuum forming in an amount of 20% by volume based on the volume of the vessel, and it was then allowed to stand at 40 °C for 24 hours. When the oil did not leak, its evaluation was represented by "○", and when it leaked, it was represented by "×".

(6) Heat-sealing

A nylon-polypropylene two-layer film having a thickness of about 50 μm was heat-sealed as a lid material so that the polypropylene layer might be on a sheet side. Conditions of 200°C, 3 seconds and a pressure of 2.5 kg/cm$^2$ were used.

(7) Adhesive strength

The adhesive strength was measured at tension speed of 200 mm/min at a peeling angle of 180° (an angle between the lid portion and the vessel portion). The adhesive strength was represented by strength to a seal width. In the case that the lid portion was clearly peeled from the vessel portion and an adhesive strength of 60 g/mm or more was exhibited, such a peeling state was represented by ○, and in the case that the adhesive strength was so strong that the film was torn or it was peeled too easily, such a peeling state was represented by x.

Table 1

| | Example | | | | |
|---|---|---|---|---|---|
| | 1 | 2 | 3 | 4 | 5 |
| Composition of both outer layers in three-layer sheet | | | | | |
| Component (A) kind*1 | A1 | A1 | A1 | A1 | A1 |
| Amount (WT%) | 35.3 | 35.3 | 35.3 | 35.3 | 35.3 |
| Component (B) kind *2 | B1 | B1 | B1 | B1 | B1 |
| Amount (WT%) | 57.1 | 57.1 | 57.1 | 57.1 | 57.1 |
| Component (C) kind *3 | C1 | C1 | C1 | C1 | C2 |
| Amount (WT%) | 2.8 | 2.8 | 2.8 | 2.8 | 2.8 |
| kind *3 | C3 | C4 | C5 | C6 | C4 |
| Amount (WT%) | 4.8 | 4.8 | 4.8 | 4.8 | 4.8 |
| Others kind *4 | | | | | |
| Amount (WT%) | | | | | |
| Composition of intermediate layer in three-layer sheet*5 | | | | | |
| | E1 | E1 | E1 | E1 | E1 |
| Evaluation | | | | | |
| Sheet tensile strength MD($kgf/cm^2$) | 250 | 244 | 245 | 196 | 205 |
| TD($kgf/cm^2$) | 177 | 191 | 148 | 205 | 174 |
| Sheet tensile elongation at break MD(%) | 219 | 217 | 206 | 78 | 169 |
| TD(%) | 87 | 110 | 47 | 213 | 107 |
| High speed puncture property (J) | 2.7 | 2.4 | 2.6 | 1.9 | 2.3 |
| Vacuum forming cooling time (sec.) | 4 | 4 | 4 | 4 | 4 |
| Oil resistance | ○ | ○ | ○ | ○ | ○ |
| Adhesive properties Strength (g/mm) | 81.2 | 70.8 | 83.6 | 70.0 | 99.5 |
| Peeling satate | ○ | ○ | ○ | ○ | ○ |

Table 1(continued)

| | Example | | | |
|---|---|---|---|---|
| | 6 | 7 | 8 | 9 |
| Composition of both outer layers in three-layer sheet | | | | |
| Component (A) kind*1 | A1 | A2 | A2 | A1 |
| Amount (WT%) | 35.3 | 35.3 | 35.3 | 37.0 |
| Component (B) kind *2 | B1 | B1 | B2 | B1 |
| Amount (WT%) | 57.1 | 57.1 | 57.1 | 60.0 |
| Component (C) kind *3 | C2 | C2 | C2 | C2 |
| Amount (WT%) | 2.8 | 2.8 | 2.8 | 3.0 |
| kind *3 | C6 | C6 | C6 | C6 |
| Amount (WT%) | 4.8 | 4.8 | 4.8 | 4.8 |
| Others kind *4 | | | | |
| Amount (WT%) | | | | |
| Composition of intermediate layer in three-layer sheet *5 | | | | |
| | E1 | E1 | E1 | E1 |
| Evaluation | | | | |
| Sheet tensile strength MD(kgf/cm$^2$) | 176 | 229 | 148 | 229 |
| TD(kgf/cm$^2$) | 187 | 230 | 178 | 166 |
| Sheet tensile elongation at break MD(%) | 106 | 177 | 56 | 40 |
| TD(%) | 259 | 216 | 83 | 4 |
| High speed puncture property (J) | 2.0 | 2.7 | 2.3 | 0.4 |
| Vacuum forming cooling time (sec.) | 4 | 4 | 4 | 4 |
| Oil resistance | ○ | ○ | ○ | ○ |
| Adhesive properties Strength (g/mm) | 78.0 | 85.2 | 86.0 | 62.4 |
| Peeling satate | ○ | ○ | ○ | ○ |

9

Table 2

| | Example | | | | |
|---|---|---|---|---|---|
| | 10 | 11 | 12 | 13 | 14 |
| Composition of both outer layers in three-layer sheet | | | | | |
| Component (A) kind*1 | A1 | A1 | A2 | A1 | A1 |
| Amount (WT%) | 26.5 | 26.5 | 26.5 | 26.5 | 27.8 |
| Component (B) kind *2 | B1 | B1 | B1 | B1 | B1 |
| Amount (WT%) | 66.7 | 66.7 | 66.7 | 66.7 | 70.0 |
| Component (C) kind *3 | C2 | C2 | C2 | C7 | C2 |
| Amount (WT%) | 2.1 | 2.1 | 2.1 | 2.1 | 2.2 |
| kind *3 | C3 | C6 | C6 | C3 | |
| Amount (WT%) | 4.7 | 4.7 | 4.7 | 4.7 | |
| Others kind *4 | | | | | |
| Amount (WT%) | | | | | |
| Composition of intermediate layer in three-layer sheet*5 | | | | | |
| | E1 | E1 | E1 | E1 | E1 |
| Evaluation | | | | | |
| Sheet tensile strength | | | | | |
| MD(kgf/cm) | 201 | 192 | 232 | 192 | 199 |
| TD(kgf/cm) | 143 | 182 | 228 | 135 | 227 |
| Sheet tensile elonga-tion at break MD(%) | 228 | 125 | 188 | 190 | 102 |
| TD(%) | 96 | 188 | 192 | 82 | 3 |
| High speed puncture property (J) | 3.0 | 2.8 | 3.2 | 2.5 | 0.59 |
| Vacuum forming cooling time (sec.) | 4 | 4 | 4 | 4 | 4 |
| Oil resistance | ○ | ○ | ○ | ○ | ○ |
| Adhesive properties | | | | | |
| Strength (g/mm) | 104 | 112 | 82.0 | 95 | 113 |
| Peeling satate | ○ | ○ | ○ | ○ | ○ |

Table 2(continued)

| | Comparative Example | | | | |
|---|---|---|---|---|---|
| | 1 | 2 | 3 | 4 | 5 |
| Composition of both outer layers in three-layer sheet | | | | | |
| Component (A) kind*1 | | | A1 | A1 | A1 |
| Amount (WT%) | | | 40 | 35.3 | 35.3 |
| Component (B) kind *2 | | | B1 | B1 | B1 |
| Amount (WT%) | | | 60 | 57.1 | 57.1 |
| Component (C) kind *3 | | | | C2 | C8 |
| Amount (WT%) | | | | 2.8 | 7.6 |
| kind *3 | | | | C8 | |
| Amount (WT%) | | | | 4.8 | |
| Others kind *4 | D1 | D2 | | | |
| Amount (WT%) | 100 | 100 | | | |
| Composition of intermediate layer in three-layer sheet*5 | | | | | |
| | E1 | E2 | E1 | E1 | E1 |
| Evaluation | | | | | |
| Sheet tensile strength MD($kgf/cm^2$) | 330 | 270 | 266 | 245 | 256 |
| TD($kgf/cm^2$) | 173 | 233 | 168 | 159 | 179 |
| Sheet tensile elongation at break MD(%) | 43 | 60 | 3 | 20 | 5 |
| TD(%) | 20 | 8 | 1 | 4 | 2 |
| High speed puncture property (J) | 1.5 | 2.5 | 0.3 | 0.3 | 0.4 |
| Vacuum forming cooling time (sec.) | 3 | 8 | 4 | 4 | 4 |
| Oil resistance | × | ○ | ○ | ○ | ○ |
| Adhesive properties Strength (g/mm) | 15.0 | *6 | 43.2 | 56.8 | 48.2 |
| Peeling satate | × | × | × | × | × |

*1: Component (A)

A1: Polystyrene resin (HIPS made by Japan Polystyrene Inc., trade name = JPS H640, MFR = 2.8 g/10 min, density = 1.05 g/cm$^3$, average gel particle diameter = 2.2 μm, MFR measurement conditions = 200°C and load of 5 kgf)

A2: Polystyrene resin (HIPS made by Japan Polystyrene Inc., trade name = JPS H655, MFR = 2.7 g/10 min, density = 1.04 g/cm$^3$, average gel particle diameter = 0.2 μm, MFR measurement conditions = 200°C and load of 5 kgf)

*2: Component (B)

B1: Polypropylene (made by Sumitomo Chemical Co., Ltd., trade name = SUMITOMO NOBLEN AD571, MFR = 0.5 g/10 min, density = 0.90 g/cm$^3$, MFR measurement conditions = 230°C and load of 2.16 kgf)

B2: Polypropylene (made by Nippon Polychem Co., Ltd., trade name = E401ETX, MFR = 2.5 g/10 min, density = 0.90 g/cm$^3$, MFR measurement conditions = 230°C and load of 2.16 kgf)

*3: Component (C): As solubility parameters (SP) of the respective components (C), the results obtained by the calculation of the above-mentioned equation 1 are shown in Table 3.

C1: Ethylene-methyl methacrylate copolymer (made by Sumitomo Chemical Co., Ltd., trade name = ACRYFT CM5019, methyl methacrylate content = 30% by weight, MFR = 20 g/10 min, MFR measurement conditions = 190°C and load of 2.16

kgf)

C2: Ethylene-methyl methacrylate copolymer (made by Sumitomo Chemical Co., Ltd., trade name = ACRYFT WM403, methyl methacrylate content = 38% by weight, MFR = 15 g/10 min, MFR measurement conditions = 190°C and load of 2.16 kgf)

C3: Styrene-butadiene copolymer (made by JSR Co., Ltd., TR2250, styrene content = 50%, butadiene content = 50%)

C4: Styrene-butadiene block copolymer (made by JSR Co., Ltd., TR2400, styrene content = 60%, butadiene content = 40%)

C5: Styrene-butadiene block copolymer (made by JSR Co., Ltd., TR2000, styrene content = 40%, butadiene content = 60%)

C6: Hydrogenated styrene-isoprene block copolymer (made by Kuraray Co., Ltd., trade name = SEPTON 2104, styrene content = 65%, isoprene content = 35%)

C7: Ethylene-vinyl acetate copolymer (made by Sumitomo Chemical Co., Ltd., trade name = SUMITATE RB-11, vinyl acetate content = 41 wt%, MFR = 60 g/10 min, MFR measurement conditions = 190°C and load of 2.16 kgf)

C8: Polymethyl methacrylate (made by Sumitomo Chemical Co., Ltd., trade name = SUMIPEKS-BMHG, MFR = 0.5 g/10 min, MFR measurement conditions = ASTM D1238)

*4: Component (D)

D1: Polystyrene resin (HIPS made by Japan Polystyrene Inc., trade name = JPS H640, MFR = 2.8 g/10 min, density = 1.05 g/cm$^3$, average gel particle diameter = 2.2 μ m, MFR measurement conditions = 200°C and load of 5 kgf)

D2: Polypropylene (made by Sumitomo Chemical Co., Ltd., trade name = SUMITOMO NOBLEN AD571, MFR = 0.5 g/10 min, density = 0.90 g/cm$^3$, MFR measurement conditions = 230° C and load of 2.16 kgf)

*5: Component (E)

E1: Polystyrene resin (HIPS made by Japan Polystyrene Inc., trade name = Nippon Polysti H640, MFR = 2.8 g/10 min, density = 1.05 g/cm$^3$, average gel particle diameter = 2.2 μm, MFR measurement conditions = 200°C and load of 5 kgf)

E2: Polypropylene (made by Sumitomo Chemical Co., Ltd., trade name = SUMITOMO NOBLEN AD571, MFR = 0.5 g/10 min, density = 0.90 g/cm$^3$, MFR measurement conditions = 230° C and load of 2.16 kgf)

*6: The adhesive strength was too strong to peel the lid.

Table 3

| | C1 | C2 | C3 | C4 | C5 | C6 | C7 | C8 |
|---|---|---|---|---|---|---|---|---|
| ρ(g/cm$^3$) | 0.94 | 0.96 | 0.96 | 0.97 | 0.95 | 0.96 | 0.97 | 1.19 |
| Molecular weight M of repeating unit | 35.7 | 38.5 | 71.1 | 75.9 | 66.9 | 60.0 | 38.7 | 100 |
| ΣFi | 321 | 341 | 628 | 667 | 593 | 529 | 343 | 778 |
| SP | 8.45 | 8.50 | 8.48 | 8.52 | 8.42 | 8.46 | 8.60 | 9.26 |

The above-mentioned results indicate the following. All the examples which met the conditions of the present invention could provide vessels which were excellent in dimensional stability at the time of vacuum forming and/or air-pressure forming of the sheet for the formation of the vessel portions and which could be molded in a short time They were excellent in impact resistance, stiffness, oil resistance and chemical resistance, and the easily openable containers had a sufficient adhesive strength as the vessels and in which the contents could be easily taken out by peeling the film of the lid portion by hand. On the other hand, in Comparative Example 1, where the vessel portion was a single layer of a polystyrene resin, oil resistance and adhesive strength were poor. Similarly in Comparative Example 2, where the vessel portion was a single layer of a polypropylene, a long cooling time was required in the step of the vacuum forming, and the adhesive strength between the lid portion and the film was too strong to accomplish good peeling. In Comparative Example 3 where no component (C) was contained, tensile elongation, impact resistance and adhesive properties were poor. In Comparative Examples 4 and 5 where polymers having solubility parameters (SP) outside the predetermined range were used as the components (C), tensile elongation at break, impact resistance and adhesive properties were poor.

**Claims**

1.  A container unit comprising a moulded vessel and a film lid, wherein

    (i) the vessel is obtainable by moulding a multi-layer sheet wherein at least one surface layer (a) of the sheet comprises a resin composition including
    from 1 to 96% by weight of a styrene polymer resin (A),
    from 96 to 1% by weight of a polyolefin resin (B), and
    from 3 to 25% by weight of another polymer (C) which is at least one of styrene copolymers and copolymers each comprising ethylene and one or more vinyl monomers of unsaturated carboxylic acids, unsaturated carboxylic acids, unsaturated carboxylates and vinyl acetate, having a solubility parameter in the range of 8.40 to 8.70, wherein the solubility parameter is calculated in accordance with the following equation:

    $$SP = \frac{\Sigma Fi}{V} = \frac{\rho \cdot \Sigma Fi}{M} \tag{1}$$

    wherein Fi is the mol attractive force of the atoms or atom groups constituting the molecule, or a constitutional group such as a bonding type; V is a molar volume; p is the density and M is the molecular weight of a monomer unit of the polymer, and
    at least one of the other layers includes a polystyrene resin (D), and
    (ii) the film lid comprises a single layer or multi-layer film, a surface (b) of which comprises polypropylene.

2.  The container unit according to claim 1 wherein said polyolefin resin is polypropylene.

3.  The container unit according to claim 1 wherein the component (A) of the vessel is 1 to 50% by weight of the styrene polymer resin, and the component (B) is 96% to 50% by weight of the polyolefin resin.

4.  The container according to Claim 1 wherein the component (A) of the vessel is 96 to 50% by weight of the styrene polymer resin, and the component (B) is 50 to 1% by weight of the polyolefin resin.

5.  The container unit according to Claim 1 wherein the polymer of the component (C) is at least one of ethylene-methyl methacrylate copolymer and styrene-butadiene copolymer, and e.g. the styrene-butadiene copolymer includes 35 to 70% by weight of styrene.

6.  The container unit according to claim 1 wherein the polymer of the component (C) is at least one of ethylene-vinyl acetate copolymer and styrene-butadiene copolymer, and e.g. the styrene-butadiene copolymer includes 35 to 70% by weight styrene.

7.  The container unit according to any preceding claim, wherein the surface layer (a) of the vessel is bonded to the surface layer (b) of the film lid, e.g. by heat sealing.

8.  The easily openable container according to claim 7 wherein the easily openable container is a food container, e.g. a bean curd container.

9. A method of packing food by the use of the container unit according to any one of claims 1 to 6 which comprises the steps of packing the food into the container, and then bonding the lid to the container.

10. A food package obtained in claim 9.

**Patentansprüche**

1. Behältereinheit, umfassend einen geformtem Behälter und einen Foliendeckel, worin

   (i) der Behälter erhalten wird durch Formen einer mehrschichtigen Folie, worin mindestens eine Oberflächenschicht (a) der Folie eine Harzzusammensetzung umfasst, die
   1 bis 96 Gew.-% Styrolpolymerharz (A),
   96 bis 1 Gew.-% Polyolefinharz (B) und
   3 bis 25 Gew.-% eines anderen Polymers (C) enthält, das mindestens eines aus Styrolcopolymeren und Copolymeren ist, die jeweils Ethylen- und ein oder mehrere Vinylmonomere ungesättigter Carbonsäuren, ungesättigte Carbonsäuren, ungesättigte Carboxylate und Vinylacetat umfassen, mit einem Löslichkeitsparameter im Bereich von 8,40 bis 8,70, wobei der Löslichkeitsparameter nach der folgenden Gleichung berechnet wird:

$$SP = \frac{\Sigma Fi}{V} = \frac{\rho \cdot \Sigma Fi}{M} \tag{1}$$

   worin Fi die molare Anziehungskraft der das Molekül bildenden Atome oder Atomgruppen, oder einer konstitutionellen Gruppe, beispielsweise eine Bindungsart ist; V das Molvolumen ist; p die Dichte und M die Molmasse einer Monomereinheit des Polymers ist, und
   mindestens eine der anderen Schichten ein Polystyrolharz (D) umfasst, und
   (ii) der Foliendeckel eine einschichtige oder mehrschichtige Folie umfasst, deren Oberfläche (b) Polypropylen umfasst.

2. Behältereinheit nach Anspruch 1, worin das Polyolfinharz Polypropylen ist.

3. Behältereinheit nach Anspruch 1, worin die Komponente (A) des Behälters 1 bis 50 Gew.-% Styrolpolymerharz und die Komponente (B) 96 bis 50 Gew.-% Polyolefinharz ist.

4. Behälter nach Anspruch 1, worin die Komponente (A) des Behälters 96 bis 50 Gew.-% Styrolpolymerharz und die Komponente (B) 50 bis 1 Gew.-% Polyolefinharz ist.

5. Behältereinheit nach Anspruch 1, worin das Polymer der Komponente (C) mindestens eines aus Ethylen-Methylmethacrylatcopolymer und Styrol-Butadiencopolymer ist, und beispielsweise das Styrol-Butadiencopolymer 35 bis 70 Gew.-% Styrol enthält.

6. Behältereinheit nach Anspruch 1, worin das Polymer der Komponente (C) mindestens eines aus Ethylen-Vinylacetatcopolymer und Styrol-Butadiencopolymer ist, und beispielsweise das Styrol-Butadiencopolymer 35 bis 70 Gew.-% enthält.

7. Behältereinheit nach einem der vorhergehenden Ansprüche, worin die Oberflächenschicht (a) des Behälters mit der Oberflächenschicht (b) des Foliendeckels, beispielweise durch Heißversiegeln, verbunden ist.

8. Leicht zu öffnender Behälter nach Anspruch 7, worin der leicht zu öffnende Behälter ein Lebensmittelbehälter, beispielsweise ein Tofubehälter ist.

9. Verfahren zum Verpacken von Lebensmitteln unter Verwendung der Behältereinheit nach einem der Ansprüche 1 bis 6, das die Schritte des Verpackens von Lebensmittel in den Behälter und anschließendes Verbinden des Deckels mit dem Behälter umfasst.

10. Lebensmittelverpackung, die nach Anspruch 9 erhalten wird.

**Revendications**

1. Ensemble de récipient comprenant un récipient moulé et un couvercle en film, dans lequel :

   (i) le récipient est susceptible d'être obtenu par moulage d'une feuille multicouche dans laquelle au moins une couche de surface (a) de la feuille comprend une composition de résine comprenant :

   de 1 à 96 % en poids d'une résine de polymère de styrène (A),
   de 96 à 1 % en poids d'une résine de polyoléfine (B), et
   de 3 à 25 % en poids d'un autre polymère (C) qui est au moins un des copolymères et polymères de styrène comprenant chacun de l'éthylène et un ou plusieurs monomères de vinyle d'acides carboxyliques insaturés, acides carboxyliques insaturés, carboxylates insaturés et acétate de vinyle, ayant un paramètre de solubilité compris dans la plage de 8,40 à 8,70, dans lequel le paramètre de solubilité est calculé selon l'équation suivante :

$$SP = \frac{\Sigma Fi}{V} = \frac{\rho \cdot \Sigma Fi}{M} \tag{1}$$

   dans laquelle Fi est la force attractive molaire des atomes ou des groupes d'atomes constituant la molécule ou un groupe constitutionnel tel qu'un type liant ; V est un volume molaire ; p est la densité et M est le poids moléculaire de l'unité monomère du polymère ; et

   au moins une des autres couches comprend une résine de polystyrène (D) ; et
   (ii) le couvercle en film comprend une couche unique ou un film multicouche, dont une surface (b) comprend du polypropylène.

2. Ensemble de récipient selon la revendication 1, dans lequel ladite résine de polyoléfine est du polypropylène.

3. Ensemble de récipient selon la revendication 1, dans lequel le composant (A) du récipient constitue de 1 à 50 % en poids de la résine de polymère de styrène, et le composant (B) constitue de 96 à 50 % en poids de la résine de polyoléfine.

4. Ensemble de récipient selon la revendication 1, dans lequel le composant (A) du récipient constitue de 96 à 50 % en poids de la résine de polymère de styrène, et le composant (B) constitue de 50 à 1 % en poids de la résine de polyoléfine.

5. Ensemble de récipient selon la revendication 1, dans lequel le polymère du composant (C) est au moins l'un parmi le copolymère de méthacrylate de méthyle-éthylène et le copolymère de styrène-butadiène, et par exemple le copolymère de styrène-butadiène comprend de 35 à 70 % en poids de styrène.

6. Ensemble de récipient selon la revendication 1, dans lequel le polymère du composant (C) est au moins l'un parmi le copolymère d'acétate de vinyle-éthylène et le copolymère de styrène-butadiène, et par exemple le copolymère de styrène-butadiène comprend de 35 à 70 % en poids de styrène.

7. Ensemble de récipient selon l'une quelconque des revendications précédentes, dans lequel la couche de surface (a) du récipient est liée à la couche de surface (b) du couvercle en film, par exemple par thermoscellage.

8. Récipient à ouverture facile selon la revendication 7, dans lequel le récipient à ouverture facile est un récipient pour produit alimentaire, par exemple un récipient pour tofu.

9. Procédé d'emballage de produits alimentaires utilisant l'ensemble de récipient selon l'une quelconque des revendications 1 à 6, qui comprend les étapes consistant à emballer le produit alimentaire dans le récipient puis à lier le couvercle du récipient.

10. Emballage pour produit alimentaire obtenu dans la revendication 9.